# FASCICULE DE BREVET EUROPEEN

(11) **EP 1 022 165 B1**
(45) Date de publication et mention de la délivrance du brevet: **17.12.2003**
(21) Numéro de dépôt: 00490003.1
(22) Date de dépôt: 18.01.2000
(51) Int. Cl.: B60D 1/44, B60D 1/30, B60D 1/167

(54) **Timon articulé intégré**
Integrierte, drehbare Anhängerdeichsel
Integrated articulated tow bar

(30) Priorité: 19.01.1999 FR 9900661
(43) Date de publication de la demande: 26.07.2000
(73) Titulaire: Woestelandt, Emile, F-59370 Mons en Baroeul (FR)
(72) Inventeur: Woestelandt, Emile, F-59370 Mons en Baroeul (FR)

(56) Documents cités:
- EP-A- 0 925 962
- FR-A- 1 514 222
- FR-A- 2 448 987
- GB-A- 1 179 139
- US-A- 4 575 110
- US-A- 4 722 542

## Description

La présente invention concerne un timon d'attelage d'une remorque A et d'un véhicule tracteur B capable de résoudre intégralement tous les problèmes de traction , en particulier le phénomène dit "du lacet" et celui de la suspension, sans obligation de modifier les structures de la remorque.

Classiquement le timon , faisant partie intégrante d'une remorque, est constitué par deux brancards rigides disposés en triangle dont la base est rigidement solidaire de la remorque et le sommet, du véhicule tracteur, grâce à une rotule, et qui comporte un dispositif réglementaire de frein par inertie.

Ce dispositif est responsable d'un phénomène redoutable appelé "mise en lacet". Celui-ci est engendré par les oscillations latérales de la remorque que provoque et amplifie considérablement et de façon croissante, le porte-à-faux arrière du véhicule tracteur.

Il existe différents systèmes ayant vocation d'atténuer ce phénomène. Il existe en particulier (FR 1514222A-10-05-1968, correspondant au préambule de 1a revendication indépendante) un dispositif de timon constitué par deux brancards disposés en trapèze isocèle, articulé à ses quatre sommets et dont la petite base antérieure est parallèle et solidaire de l'arrière du véhicule tracteur, tandis que la grande base postérieure demeure fixée parallèlement à l'avant de la remorque, à laquelle il est soit immobilisé soit articulé par des rotules. Ce dispositif est remarquable par sa propriété de transférer virtuellement l'articulation des véhicules associés, à l'aplomb de l'essieu arrière du véhicule tracteur, et ainsi de neutraliser le porte-à-faux incriminé. D'autres systèmes ont amélioré ce dispositif par l'utilisation de lames de ressort en fait de brancards pour diminuer les battements verticaux exercés au niveau de la rotule, très préjudiciables au confort , à la sécurité et à l'intégrité des véhicules.

Cependant ces systèmes présentent l'inconvénient majeur de diminuer le rayon de braquage de la remorque qu'il amène ainsi à augmenter le risque d'accrochage en resserrant sa trajectoire en virage.

Il existe par ailleurs des dispositifs capables de neutraliser cet inconvénient majeur. Ils ont en commun , mais de manière différente, la possibilité de transformer le timon trapèze comme décrit ci-avant en timon triangle, selon l'angle de virage . Ainsi , lors d'un virage exigeant une réduction de la vitesse excluant tout risque de lacet, mais augmentant celui d'accrochage de la remorque, celle-ci est ramenée dans le sillage conféré par le timon classique.

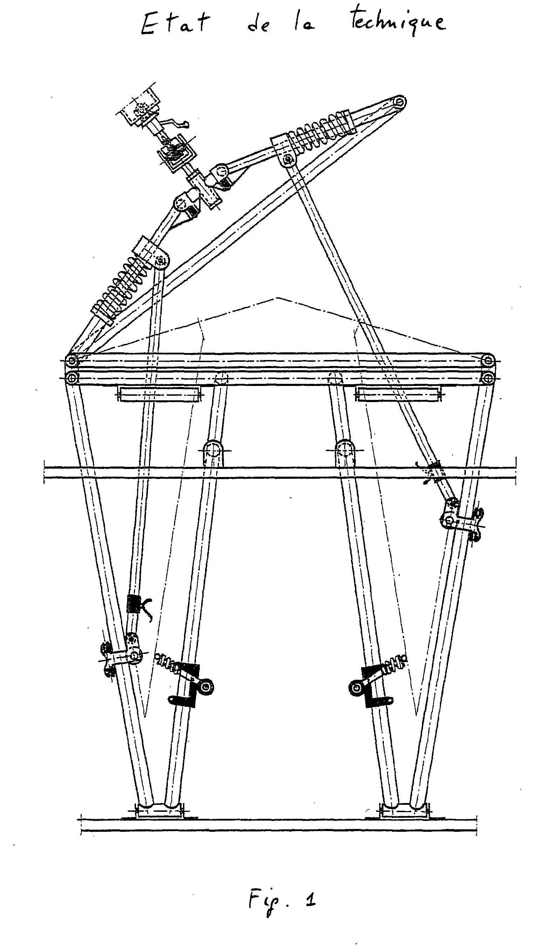

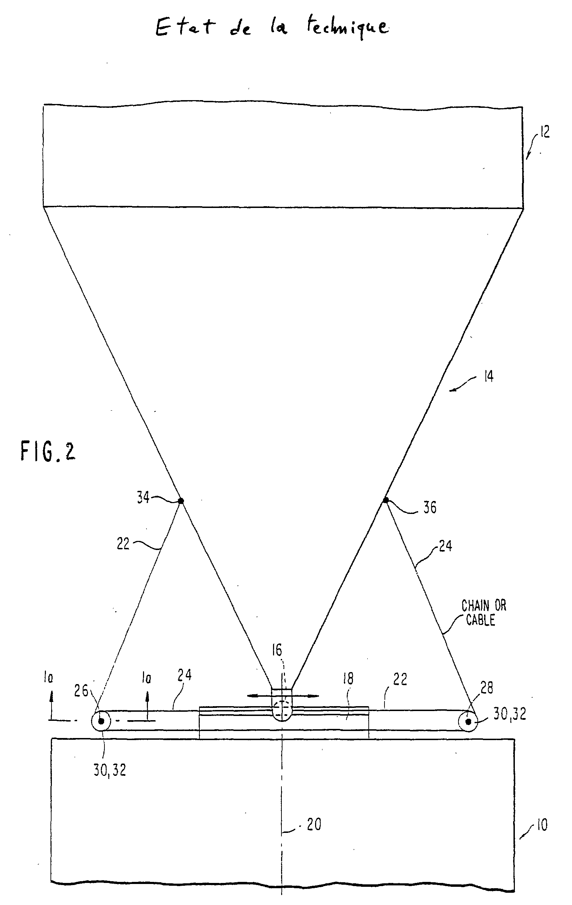

Il existe également (US 4575110A-03-1986) un dispositif capable de neutraliser le porte-à-faux arrière du véhicule tracteur, grâce à un mécanisme pouvant associer des cables, des chaines et des poulies. Il est constitué par deux brancards disposés en trapèze, à petite base anterieure et solidaire de l'arrière du véhicule tracteur et dont la grande base postérieure est constituée par une barre indépendan te de l'avant de la remorque, pouvant pivoter selon un axe vertical et coulisser d'avant en arrière sur un bras télescopique tenant lieu de timon et terminé en avant par un accouplement classique,lequel est capable de coulisser transversalement le long de la petite base de ce timon. Un système de tendeurs solidarise le bras télescopique aux brancards. Mais ce dispositif présente l'inconvénient d'augmenter considérablement le déport de la remorque en virage, sans pouvoir le réduire en forte courbe, malgrè sa complexité. Il ne permet pas d'autre part d'assurer le freinage par inertie règlementaire (cf. également les figures 1 et 2, se référant auxdites antériorités). Tous ces dispositifs présentent en commun l'inconvénient commercial inhibiteur de devoir modifier les structures de la remorque pour s'y substituer.

Ces structures concernent le timon classique tel qu'installé par le constructeur, et constitué par les deux brancards,disposés en triangle rigide, solidaire du chassis de la remorque et terminé en avant par une tête d'attelage comportant un dispositif de freinage par inertie et accouplé au véhicule tracteur par un dispositif à rotule. Cette modification de structure de la remorque implique de surcroit l'agrément du constructeur de la remorque qui les refuse inexorablement.

La présente invention, qui est définie dans la revendication indépendante, permet de manière globalement originale, tout en associant des moyens connus, mais comportant des particularités importantes
1° D'obtenir un effet anti-lacet intégral
2° De limiter cette propriété à un angle de virage prédéterminé ,compatible à grande vitesse,et d'éviter tout accrochage de la remorque pour un angle de virage supérieur; par suite du déport important de la dite remorque qui en résulte
3° De permettre une suspension par cisaillement entre les véhicules associés
4° De maintenir intégralement toutes les structures d'origine de la remorque en particulier la flèche, avec ses brancards (10) , sa tête d'attelage classique (27) et son dispositif imposé de frein par inertie.

Il est destiné à équiper les remorques telles que caravanes, vans, porte-bateaux, porte-véhicules etc...

Se référant par analogie au document FR-A-2 788 472, qui ne forme pas partie de l'état de la technique étant donné sa date de publication du 21 juillet 2000, et plus particulièrement à la figure (1), l'invention comporte le correcteur de trajectoire (1) et le modulateur d'angle (2)
1° Le correcteur de trajectoire (1), en forme de trapèze isocèle est constitué par une base (3) et deux cotés (4). La base, comme de façon connue, est une barre non déformable coudée à ses extremités de façon à constituer une partie de ses côtés, à l'extremité de laquelle respectivement est disposé un coussinet (5) selon un axe commun qui lui est parallèle. Les côtés (4) sont des barres de torsion coudées à leurs extremités. Les parties coudées postérieures transversales et orientées vers l'extérieur, pivotent dans les coussinets (5) de façon à ne pas permettre de rotation selon un axe vertical, les parties coudées antérieures (7) verticales pivotant dans les coussinets (8) des baladeurs latéraux (15) et (17) de façon à ne pas permettre de rotation selon un axe horizontal. Le correcteur de trajectoire est positionné sous ou sur les brancards(10) du timon effectif dont il adopte toutes le orientations et avec lesquels ils coopèrent par les coussinets (9) à l'intérieur des parties coudées de sa base. Il apparait ainsi que le correcteur de trajectoire n'est pas soumis, d'une part à une articulation selon un axe vertical à sa partie postérieure, ceci lui confère la fonction recherchée de ressort de rappel s'exerçant au niveau du modulateur d'angle, et d'autre part n'est pas soumis non plus à un axe horizontal à sa partie antérieure, ce qui lui confère une fonction de suspension. Certes cette fonction primordiale est déjà connue, comme représentant une composante majeure dans l'équilibre réciproque en trois dimensions des véhicules associés. Elle ne s'exerce pourtant que selon un seul axe transversal, ce qui amène les deux véhicules à subir les mêmes oscillations verticales au niveau de leur point commun d'attelage.
2 ° Le modulateur d'angle (2) posé transversalement à l'avant du timon réel comporte de façon schématique dans l'exemple choisi
   A Deux rails de translation (11) maintenus parallèlement à leurs extrémités, soit de façon rigide entre eux moyennant boulonnage, soit de façon amovible à la ferrure d'attelage (13) du véhicule tracteur, moyennant un dispositif automatique amovible;
   B Les trois baladeurs 15, 16 et 17 coulissent sur les rails de translation (11). Les deux premiers baladeurs ou baladeurs latéraux tels que définis auparavant 15 et 17 comportent en arrière un coussinet vertical (8) dans lequel pivote la partie coudée verticale (7) des côtés (4) du correcteur de trajectoire. Le troisième baladeur 16, placé entre les précédents et étant ainsi un baladeur médian, coopére avec le rail de translation libre, les baladeurs (15) et (17) pouvant n'occuper que l'autre rail. Le baladeur (16) supporte la rotule d'attelage classique, ou éventuellement un axe en tenant lieu , destinée à s'articuler avec la coupole classique de la tête d'attelage de la remorque. La rotule, par sa coupole, peut être prolongée en arrière par un bras (18) rendu axialement indépendant du timon de la remorque (10) grâce à une solution de continuité et par l'interposition d'un ressort de maintien. Ainsi la désolidarisation en fin de compte des différents éléments du timon fait que l'articulation des deux véhicules associés s'effectue par cisaillement vertical, c'est à dire selon deux axes transversaux parallèles, ce qui est sensiblement préférable à une articulation selon un seul axe commun. il est évident que, étant donné la fonction portante du timon, le ressort doit être encadré par un double quadrilatère vertical, articulé en avant et en arrière par des axes transversaux parallèles.
   C Le verrouillage des baladeurs (15) et (17) (fig 3). Chacun de ces baladeurs comporte un verrou (27) constitué par un levier qui est solidarisé parallèlement par un axe (20) à ce baladeur et est terminé en dehors par un crochet (21) solidaire indirectement des rails grâce à une gâche fixe (22)et en dedans, par une queue d'échappement (23) . Celle-ci est tributaire d'un poussoir (24) saillant de chaque côté du baladeur (16) . Un ressort de rappel (25) maintient le verrou en position fermée. La largeur du modulateur d'angle est telle qu'elle limite la translation du baladeur (16) de façon à ce que ne soit pas dépassé l'angle de virage prédéterminé.
Ainsi on peut comprendre qu'en virage inférieur à une angulation prédéterminée le correcteur de trajectoire emmagazine et neutralise le déport du porte-à-faux arrière du véhicule tracteur, comme cela se produit avec un timon trapézoïdal articulé. Ceci se traduit par la translation du baladeur (16) sur les rails de translation (11) jusqu'à ses limites déterminées par la position des baladeurs (15) et (17). Au delà de cette limite, l'augmentation de l'angle de virage amène obligatoirement le baladeur correspondant à se déplacer sur les rails de translation en dedans, en entrainant ledit baladeur median (16). L'angle de virage étant défini par l'intersection des axes longitudinaux du véhicule tracteur et de la remorque. Pour que cela soit possible il est nécessaire de compter sur le rôle de ressort de rappel du correcteur de trajectoire, en effet les bras du correcteur de trajectoire ne peuvent pivoter selon un axe vertical au niveau des coussinets (5). Il est également nécessaire de faire intervenir le système de verrouillage . Ce système:
1° bloque les baladeurs (15) et (17) tant que l'angle de virage n'est pas atteint, laissant libre jeu au baladeur (16), d'un côté comme de l'autre;
2° libère l'un ou l'autre baladeur, au contact desquels parvient en fin de course le troisième baladeur ou baladeur médian (16) par l'action d'un de ses poussoirs (24) sur le verrou. De cette façon , au delà d'un angle de virage prédéterminé, le déport de la remorque, au lieu d'augmenter, diminue du fait du recentrage du baladeur médian (16) et de l'un des deux autres. Dans un second temps, la remise en ligne s'effectue grâce au rôle de ressort de rappel dévolu au correcteur de trajectoire.

En conclusion, il s'avère que l'invention présente permet d'obtenir l'alternance d'une première séquence à effet anti-lacet maximum : grande vitesse-petit angle de virage, telle que rencontrée sur autoroute, et d'une seconde séquence : petite vitesse-grand angle de virage alors que l'effet anti-lacet n'est plus recherché et que par contre l'augmentation de l'encombrement s'avère préjudiciable car responsable d'accrochage de la remorque, en ville tout particulièrement.

Il est à noter que les structures de la remorque que l'invention permet de maintenir concernent la flèche-timon, la tête d'attelage avec son dispositif de frein par inertie et la rotule classique fixée au baladeur (16). D'autre part, le verrou (27) est constitué par un levier terminé respectivement à chaque extrémité par un crochet et une queue d'échappement.

Il est à noter en outre, que le dispositif connu de timon en forme de trapèze isocèle articulé à ses sommets et capable de neutraliser le phénomène du lacet, comporte deux bras élastiques qui en arrière sont, soit immobilisés, soit articulés par des rotules, au timon classique.

## Revendications

1. Dispositif d'attelage d'une remorque (A) et d'un véhicule tracteur (B), ce dispositif étant disposé au dessus ou en dessous du timon d'origine (10) et permettant le déplacement latéral en même temps que vertical de leur point d'accouplement classique (19), pour le libérer du porte-à-faux constitué par l'arrière du véhicule tracteur, afin d'empécher la mise en lacet de la remorque et d'assurer la fonction primordiale de suspension par cisaillement vertical entre les véhicules associés, sans toutefois nécessiter la suppression du timon d'origine (10) pour s'y substituer, les moyens employés comportant un premier élément (1), dit correcteur de trajectoire, subordonnant virtuellement la trajectoire de la remorque (A) à l'essieu arrière du véhicule tracteur (B) en vitesse élevée, **caractérisé par** un deuxième élément (2), dit modulateur d'angle, ramenant cette trajectoire sous la dépendance du point d'accouplement classique en vitesse reduite, lesdits premier et deuxième éléments (1, 2) constituant un trapèze isocèle comportant:
- une grande base postérieure qui est une barre transversale non déformable (3) dont les extrémités coudées se terminent par de premiers coussinets (5) à axe transversal commun, ladite barre (3) étant solidarisée avec le timon d'origine (10) par de deuxièmes coussinets (9);
- deux côtés (4) qui sont des barres de torsion (4) coudées à leurs extrémités, les parties coudées postérieures (6) horizontales, transversales et orientées vers l'extérieur pivotant dans lesdits premiers coussinets (5), de façon à ne pas pouvoir pivoter selon un axe vertical mais ainsi se comporter en ressort de rappel pour deux baladeurs latéraux (15, 17), les parties coudées antérieures (7) verticales pivotant dans de troisièmes coussinets (8), d'axe vertical, des baladeurs latéraux (15, 17) de façon à ne pas pouvoir pivoter selon un axe horizontal et ainsi contribuer à la fonction de suspension par cisaillement;
- une petite base concrétisée par deux rails (11) de translation jumelés dudit deuxième élément (2),
lesdits premier et deuxième baladeurs (15,17) ainsi qu'un troisième baladeur (16), placé entre ces derniers (15, 17), coulissant sur ces rails (11), lesdits premier et deuxième baladeurs (15,17) comportant en arrière lesdits troisièmes coussinets (8), tandis que le troisième baladeur (16) supporte la rotule (19) d'accouplement classique, qui comporte à la fois un ressort de maintien nécessitant des moyens tels qu'un quadrilatère articulé afin d'assurer, étant donné la fonction portante du timon (10), ladite fonction de suspension par cisaillement.

2. Dispositif d'attelage selon la revendication 1, **caractérisée en ce que** lesdits premier et deuxième baladeurs latéraux (15, 17) comportent respectivement un verrou (27) constitué par un levier régi par un axe (20) et doté d'un ressort de rappel (25) dudit verrou en position fermé, ledit levier étant terminé en dehors par un crochet (21) coopérant avec une gâche extérieure fixe (22) et en dedans par une zone d'échappement (23) soumise audit troisième baladeur (16), qui est muni de chaque côté d'un poussoir saillant (24).

## Patentansprüche

1. Kupplungsvorrichtung eines Anhängers (A) und eines Zugfahrzeugs (B), wobei diese Vorrichtung oberhalb oder unterhalb der Originaldeichsel (10) angeordnet ist und gleichzeitig die seitliche und senkrechte Verschiebung des herkömmlichen Kupplungspunktes (19) ermöglicht, um ihn aus dem Überhang zu befreien, der durch die Rückseite des Zugfahrzeugs gebildet wird, und dadurch die Schlingerbewegung des Anhängers zu verhindern und die wesentliche Funktion der Federung durch Vertikalscherung zwischen den verbundenen Fahrzeugen zu gewährleisten, ohne dass die Originaldeichsel (10) entfernt werden müsste, um an deren Stelle zu treten, wobei die dafür eingesetzten Mittel ein erstes Teil (1) umfassen, das als Spurkorrektor bezeichnet wird und bei hoher Geschwindigkeit die Bahn des Anhängers (A) virtuell der Hinterachse des Zugfahrzeugs (B) unterordnet, **gekennzeichnet durch** ein zweites Element (2), das als Winkelmodulator bezeichnet wird und bei geringer Geschwindigkeit diese Spur wieder vom herkömmlichen Kupplungspunkt abhängig macht, wobei die ersten und zweiten Elemente (1, 2) ein gleichschenkliges Trapez bilden mit:
- einem großen hinteren Basisteil, das eine nicht verformbare Querstange (3) ist, deren abgewinkelte Endstücke **durch** erste Lager (5) mit gemeinsamer Querachse enden, wobei die Stange (3) **durch** zweite Lager (9) mit der Originaldeichsel (10) verbunden ist;
- zwei Seitenteilen (4), bei denen es sich um an den Enden gebogene Drehstäbe (4) handelt, wobei die waagrechten, quer verlaufenden und nach außen gerichteten hinteren Bogenteile (6) in den ersten Lagern (5) drehbar gelagert sind, um nicht in einer senkrechten Achse ausschwenken zu können, sondern sich als Rückholfedern für zwei seitliche Schubmuffen (15, 17) zu verhalten, während die vorderen vertikalen Bogenteile (7) in dritten senkrechtachsigen Lagern (8) der seitlichen Schubmuffen (15, 17) so drehbar gelagert sind, dass sie nicht in einer waagrechten Achse ausschwenken können und damit zur Funktion der Scherfederung beitragen;
- einem kleinen Basisteil bestehend aus Zwillingslaufschienen (11) des besagten zweiten Elements (2),
wobei sich die erste und zweite Schubmuffe (15, 17) sowie eine dritte Schubmuffe (16), die zwischen den beiden anderen (15, 17) platziert ist, auf Schienen verschieben, wobei die erste und zweite Schubmuffe (15, 17) rückseitig die besagten dritten Lager (8) umfassen, während die dritte Schubmuffe (16) das herkömmliche Kupplungskugelgelenk (19) trägt, das zugleich eine Haltefeder umfasst, die angesichts der tragenden Funktion der Deichsel (10), der besagten Scherfederungsfunktion, Einrichtungen wie z. B. ein gelenkig gelagertes Viereck erfordert.

2. Kupplungsvorrichtung nach Anspruch 1, **dadurch gekennzeichnet, dass** die ersten und zweiten seitlichen Schubmuffen (15, 17) jeweils einen Riegel (27) umfassen, der aus einem einer Achse (20) unterworfenen Hebel besteht und mit einer Rückholfeder (25) des Riegels in geschlossener Stellung ausgestattet ist, wobei der Hebel außen in einem Haken (21), der mit einem ortsfesten äußeren Schließblech (22) zusammenwirkt, und innen in einem Auslassbereich (23) endet, welcher von der dritten Schubmuffe (16) abhängig ist, die beiderseits mit einem vorstehenden Druckbolzen (24) versehen ist.

## Claims

1. Coupling system of a trailer (A) and of a towing vehicle (B), this system being placed above or under the origin drawbar (10) allowing both the lateral as well as the vertical displacement from their traditional coupling point (19), to free it from the overhang created by the rear of the towing vehicle, so as to prevent the yaw motion of the trailer and to ensure the essential function of the suspension by vertical shear between the associated vehicles, without however necessitating the suppression of the origin drawbar (10) in order to play its part, the means employed include a first element (1), called a path corrector, virtually subordinating the path of trailer (A) to the rear axle of the towing vehicle (B) at high speed, **characterised by** a second element (2), called an angle modulator, bringing the path under the dependence of the traditional coupling point at low speed, the said first and second elements (1, 2) forming an isosceles trapeze which includes:
- a large rear base which is a non deformable transversal bar (3) the extremities of which are bent and terminate with a first set of bushings (5) with a common transversal axis, the said bar (3) being solid with the origin drawbar (10) by a second set of bushings (9);
- two sides (4) which are torque bars (4) bent at their extremities, the rear bent parts (6) horizontal, transversal and oriented toward the outside pivot on the said first bushings (5), so as not to be able to pivot according to a vertical axis but to act as a return spring for two lateral sliding gear (15, 17), the front bent parts (7) vertical and pivoting in a third set of bushings (8), of vertical axis, of the lateral sliding gear (15, 17) so as not to be able to pivot according to a horizontal axis and thus contribute to the shear suspension function;
- a small base made up of two rails (11) operating a twin translation movement of the said second element (2),
the said first and second sliding gear (15, 17) as well as a third sliding gear (16), placed between the first two (15, 17), slide on these rails (11), the said first and second sliding gear (15, 17) including in the rear the said third bushings (8), while the third sliding gear (16) supports the ball socket (19) of the traditional coupling, that includes both a retaining spring requiring means such as a four bar linkage so as to ensure, considering the drawbar's (10) shear suspension bearing function.

2. Coupling system according to claim 1, **characterised by** the fact that the first and second lateral sliding gear (15, 17) respectively include a lock (27) made up of a lever controlled by an axis (20) and equipped with a return spring (25) of the said lock in closed position, the said lever being ended outside by a hook (21) cooperating with a set external lock plate (22) and inside by an escapement area (23) subject to the said third sliding gear (16), that is equipped on each side with a protruding tappet (24).
